# EUROPÄISCHE PATENTSCHRIFT

(11) **EP 1 984 998 B1**
(45) Veröffentlichungstag und Bekanntmachung des Hinweises auf die Patenterteilung: **23.01.2013**
(21) Anmeldenummer: 07703429.6
(22) Anmeldetag: 13.02.2007
(51) Int. Cl.: H02K 1/18, H02K 5/20, H02K 9/14, H02K 7/18, F03B 13/10

(54) **VORRICHTUNG ZUR THERMOMECHANISCHEN ENTKOPPELUNG VON GEHÄUSE UND FESTSTEHENDEM TEIL EINER ROTATIONSMASCHINE**
APPARATUS FOR THERMOMECHANICAL DECOUPLING OF THE HOUSING AND STATIONARY PART OF A ROTATING MACHINE
DISPOSITIF DE DECOUPLAGE THERMOMECANIQUE DU BOITIER ET DE LA PARTIE FIXE D'UNE MACHINE EN ROTATION

(30) Priorität: 15.02.2006 AT 2392006
(43) Veröffentlichungstag der Anmeldung: 29.10.2008
(73) Patentinhaber: Andritz Hydro GmbH, 1141 Wien (AT)
(72) Erfinder: THALER, Georg, A-8043 Graz (AT)
(74) Vertreter: Schweinzer, Friedrich
(86) Internationale Anmeldenummer: PCT/EP2007/001218
(87) Internationale Veröffentlichungsnummer: WO 2007/093369

(56) Entgegenhaltungen:
- EP-A2- 0 755 109
- DE-A1- 2 852 391
- DE-B- 1 195 401
- JP-A- 56 107 767

## Beschreibung

Die Erfindung betrifft eine Vorrichtung zur thermomechanischen Entkoppelung von Gehäuse und feststehendem Teil einer dynamoelektrischen Rotationsmaschine, eine Verwendung für diese Vorrichtung sowie eine entsprechende Rotationsmaschine.

Die Erfindung bezieht sich auf Rotationsmaschinen, wo ein feststehender Teil (Stator bzw. Statorblechpaket) in einem Gehäuse gelagert werden soll, betrifft also jede Art von Motor oder Generator. Der rotierende Teil, auch Rotor genannt, ist dabei innerhalb des Stators angeordnet.

Besonders vorteilhaft ist diese Verbindung zwischen Statorblechpaket und Gehäusemantel, wenn große Temperatur- oder Radialsteifigkeitsunterschiede zwischen Gehäuse und Blechpaket vorliegen.

Dies ist beispielsweise bei Rohrturbinengeneratoren der Fall, wo das Gehäuse durch das vorbeifließende, in der Regel kühle Triebwasser gekühlt wird, sich aber das Statorblechpaket im Betrieb aufheizt. Zusätzlich übt der am Gehäusemantel anliegende Wasserdruck eine radiale Belastung auf das Gehäuse und auf das Statorblechpaket aus. Sowohl der Temperaturunterschied als auch der allfällige Wasserdruck verursachen tangentiale Druckspannungen im Blechpaket, die zur mechanischen Instabilität des Blechpaketes führen können. Die Folge davon kann ein Ausbeulen der Bleche bzw. Blechschichten des Statorblechpaketes sein. Starkes Ausbeulen kann zu Beschädigungen der Bleche, der Wicklung oder anderer Teile des Generators führen.

Grundsätzlich gibt es bereits einen weit zurückliegenden Stand der Technik, der eine nicht starre Halterung des Stators zeigt. Aus der GB 800613 ist eine dynamoelektrische Maschine bekannt, die ein zylindrisches Gehäuse mit inneren Rahmenringen aufweist, die über federartige Mittel mit Rahmenringen des Statorkemes verbunden sind. Wie diese federartigen Mittel ausgeführt sind, wird nicht geoffenbart. Allerdings kann durch beliebige federartige Mittel nicht sichergestellt werden, dass die Position des Blechpaketes in axialer Richtung ausreichend gesichert ist und dass die zentrierte Ausrichtung erhalten bleibt.

Die Druckschrift DE 2852391 A1 offenbart ein Statorgehäuse mit zwei Hohlzylindern, die voneinander thermisch isoliert sind. Durch diese Isolierung hat der innere Hohlzylinder annähernd die gleiche Temperatur wie der Statorkern und somit werden die temperaturbedingten Druckspannungen minimiert. Der innere Hohlzylinder muss jedoch sehr massiv ausgeführt werden, da er nur an den Enden befestigt ist und sämtliche Kräfte aufnehmen muss.

Die Druckschrift JP 56107767 A offenbart einen Stator aus 2 Zylindern, die mittels axial verlaufender Rippen, die dreiecksförmig angeordnet sind, miteinander verbunden sind. Die Blechpaketleisten sind zwischen den inneren Spitzen der Dreiecke am Zylinder befestigt um mehr radiale Nachgiebigkeit zu erlangen.

Die EP 0 755109 A2 offenbart einen Rohrgenerator, der auch bei großen Gehäuseringdurchmessern eine steife und allen thermischen und magnetischen Beanspruchungen gewachsene Statoraufhängung ermöglicht und optimal gekühlt werden kann. Durch die fachwerkartige Anbringung der axial verlaufenden Distanzelemente wird das Gehäuse versteift (z.B. für die Belastung des Wasserdruckes). Die thermische Dehnung wird in der EP 0 755 109 A2 durch Spalte ermöglicht.

Die DE 11 95 401 B offenbart einen Rohrgenerator für Einphasenwechselstrom-Generatoren. Mit Hilfe von Federn werden dabei Pulsationen des Gesamtdrehmomentes in Umfangsrichtung abgefedert. Die DE 11 95 401 B zielt auf die bei elektrischen Einphasenwechselstrom-Generatoren erforderliche elastische Drehlagerung des Statorgehäuses ab und nicht auf eine eventuelle thermomechanische Entkoppelung von Radialsteifigketen.

Eine Aufgabe der vorliegenden Erfindung besteht nun darin, eine Vorrichtung zur thermomechanischen Entkoppelung von Gehäuse und feststehendem Teil (Stator) einer Rotationsmaschine zu schaffen, mit der eine zentrierte, gegen laterale Verschiebung des Stators, insbesondere des Blechpakets des Stators, steife Lagerung erzielt wird, während insbesondere das thermische Wachstum des Stators wenig behindert wird.

Diese Aufgabe wird durch eine erfindungsgemäße Vorrichtung gemäß Patentanspruch 1 gelöst. Weitere Ausgestaltungsformen der Erfindung sind Gegenstand der abhängigen Ansprüche. Durch den Einsatz der erfindungsgemäßen Rotationsschale(n) kommt es zu einer thermomechanischen Entkoppelung, die die tangentialen Druckspannungen im Stator, z.B. dem Blechpaket, drastisch reduzieren.

Die Rotationsschale ist ein dünnwandiger Rotationskörper, der geometrisch gesprochen (im Idealfall) durch die Drehung einer Erzeugenden um eine Drehachse (im eingebauten Zustand die Drehachse der Rotationsmaschine) entsteht. Die Rotationsschale kann durchgehend ringförmig (=über den Umfang geschlossen) sein, es hat aber natürlich eine ähnliche Wirkung, wenn nur Teile dieses Rings (Ringsegmente) verwendet werden, also einzelne Segmente fehlen.

Die erfindungsgemäße Vorrichtung kann lediglich aus einer Rotationsschale bestehen, es können aber auch mehrere Rotationsschalen angeordnet und miteinander verbunden werden.

Wesentlich ist, dass sich die Rotationsschale vom Gehäuse nicht nur radial nach innen oder nach außen (im eingebauten Zustand also zur Drehachse des Rotors) erstreckt - wie das bei einem Kreisring der Fall wäre - sondern auch in axialer Richtung (im eingebauten Zustand parallel zur Drehachse des Rotors). Wenn sich nun der Stator erwärmt und radial ausdehnt, drückt dieser radial gegen die Rotationsschale und diese wird an der Befestigung zum Stator nach außen gedrückt, gibt somit wie eine Blattfeder nach.

Die Rotationsschale ist daher in der Regel aus einem festen Material mit einer entsprechenden Elastizität ausgebildet, also etwa aus Stahlblech.

Die Rotationsschale kann auch Öffnungen zur Belüftung haben.

Als einfach zu fertigende Lösung kann die Rotationsschale ein Zylindermantel oder ein Kegelstumpfmantel sein. Sowohl Zylinder- als auch Kegelstumpfmantel können durch Fassettenformen angenähert werden; einzelne Fassettenelemente dürfen ausgelassen werden.

Selbstverständlich kann die Erzeugende der Rotationsschale aus geraden oder gekrümmten Linien zusammengesetzt werden.

Es sind auch Kombinationen von mehreren der oben genannten Rotationsschalen zu einer erfindungsgemäßen Vorrichtung möglich, also etwa zwei konzentrische Zylindermäntel. Diese Rotationsschalen sind dann durch Distanzelemente, wie Distanzringe, in radialer Richtung voneinander beabstandet. Die Distanzelemente können in einer sehr einfachen Ausführungsform kreisringförmig oder polygonal sein. Sie können auch Öffnungen haben.

Bei Verwendung von mindestens einem Kegelstumpfmantel als Rotationsschale können diese mit Distanzringen oder direkt miteinander verbunden werden.

Die Rotationsschale kann Öffnungen aufweisen, die den Durchtritt von Kühlmedium (wie Luft) ermöglichen.

Eine erfindungsgemäße dynamoelektrische Rotationsmaschine umfassend zumindest ein Gehäuse und einen feststehenden Teil, ist dadurch gekennzeichnet, dass diese eine oben beschriebene Vorrichtung zur thermomechanischen Entkoppelung aufweist, wobei diese Vorrichtung einerseits mit dem Gehäuse und andererseits mit einem Haltering des feststehenden Teils verbunden ist.

Das Gehäuse kann einen Gehäusemantel mit nach innen gerichteten Gehäusespanten aufweisen und die Vorrichtung zur thermomechanischen Entkoppelung kann an den Gehäusespanten befestigt sein.

Der Gehäusemantel kann die Form eines rotierten Linienzuges haben oder fassettenförmig angenähert sein. Der Gehäusemantel kann Luftöffnungen beinhalten. Er überträgt die Belastungen der Halterungen für die Befestigung des Stators zum Fundament.

Die Gehäusespanten können in einer sehr einfachen Ausführungsform beispielsweise kreisringförmig oder auch polygonal angenähert sein. Zur Belüftung in axialer Richtung kann die Gehäusespante Öffnungen aufweisen.

Die Gestaltung der Gehäusespanten richtet sich nach den vorhandenen geometrischen Verhältnissen und den physikalischen Erfordernissen und kann annähernd unabhängig vom Stator durchgeführt werden. Es sind vor allem physikalische Erfordernisse zu berücksichtigen: Belüftung, mechanische Instabilität, z.B. Beulung, aufgrund des anliegenden Wasserdruckes bei Rohrturbinengeneratoren, Ovalität des Gehäuses aufgrund des Auftriebes bei Rohrturbinengeneratoren, Axialsteifigkeit, Radialsteifigkeit, Festigkeit. Es muss auf jeden Fall die Formstabilität gegeben sein.

Es müssen nicht unbedingt Gehäusespanten vorhanden sein, die Vorrichtung zur thermomechanischen Entkoppelung kann auch direkt am Gehäusemantel befestigt sein.

Der feststehende Teil weist Halteringe auf und die Vorrichtung zur thermomechanischen Entkoppelung is an den Halteringen befestigt. Auch die Halteringe können kreisringförmig oder polygonal ausgebildet sein.

Die Gestaltung der Halteringe richtet sich nach den vorhandenen geometrischen Verhältnissen und den physikalischen Erfordernissen des Statorblechpaketes und kann annähernd unabhängig vom Gehäuse und gegebenenfalls den Gehäusespanten durchgeführt werden. Physikalische Erfordernisse hierzu sind: Öffnungen für die Belüftung, Formstabilität, akzeptables dynamisches Betriebsverhalten.

Die Halteringe können als besonders einfache Ausgestaltung kreisringförmig oder polygonal sein. Die radiale Höhe und Dicke der Halteringe sollen dementsprechend gestaltet sein, dass die Formstabilität (z.B. Rundheit) des Blechpaketes gegeben ist. Dazu können auch zusätzliche Halteringe verwendet werden, die nicht mit Rotationsschalen verbunden sind.

Bei Verwendung eines Kegelstumpfmantels als Rotationsschale kann auf die Gehäusespanten verzichtet werden.

Gehäusespanten und Halteringe sind zueinander axial versetzt. Bei Verwendung von mehr als zwei Gehäusespanten bzw. Halteringen kann der axiale Abstand zwischen den Gehäusespanten bzw. zwischen den Halteringen unterschiedlich sein. Die Form, axiale Höhe und Blechstärke der Rotationsschalen können zwischen unterschiedlichen Gehäusespanten bzw. Halteringen unterschiedlich sein.

Der feststehende Teil kann ein Blechpaket umfassen, das mittels Blechpaketleisten mit den Halteringen verbunden ist. Der Haltering dient zur Aufnahme der Blechpaketleisten und erlaubt eine radiale Distanzierung zur Rotationsschale. Die Blechpaketleisten dienen als Verbindungselement zwischen Rotationsschale bzw. Haltering und Blechpaket. Weiters dienen sie als Führung für die einzelnen Blechpaketsegmente.

Die Rotationsmaschine kann als Generator, etwa als Rohrturbinengenerator, ausgebildet sein.

Die erfindungsgemäße Vorrichtung zur thermomechanischen Entkoppelung ist klarerweise dazu gedacht, zwischen Gehäuse und feststehendem Teil einer dynamoelektrischen Rotationsmaschine eingebaut zu werden.

Die erfindungsgemäße dynamoelektrische Maschine lässt sich besonders vorteilhaft als Generator, insbesondere als Rohrturbinengenerator einsetzen.

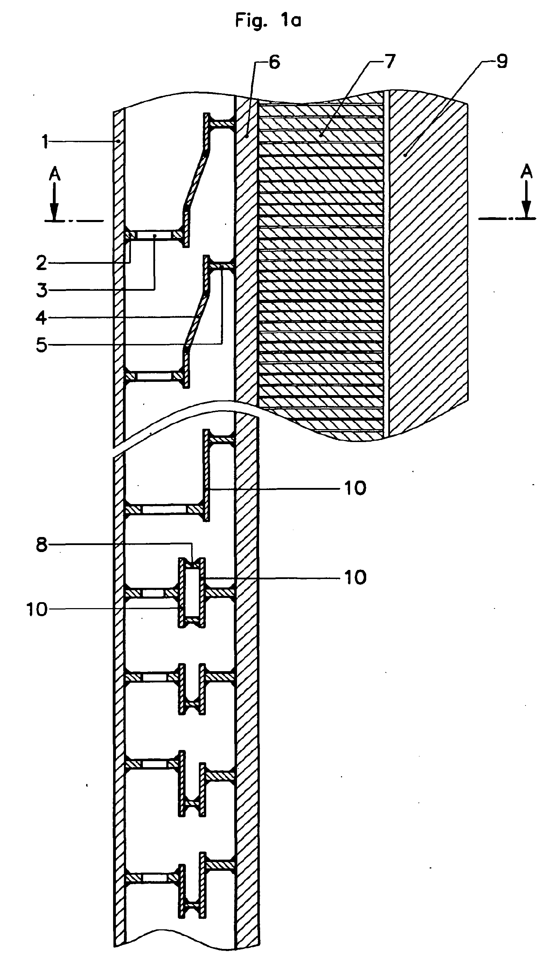

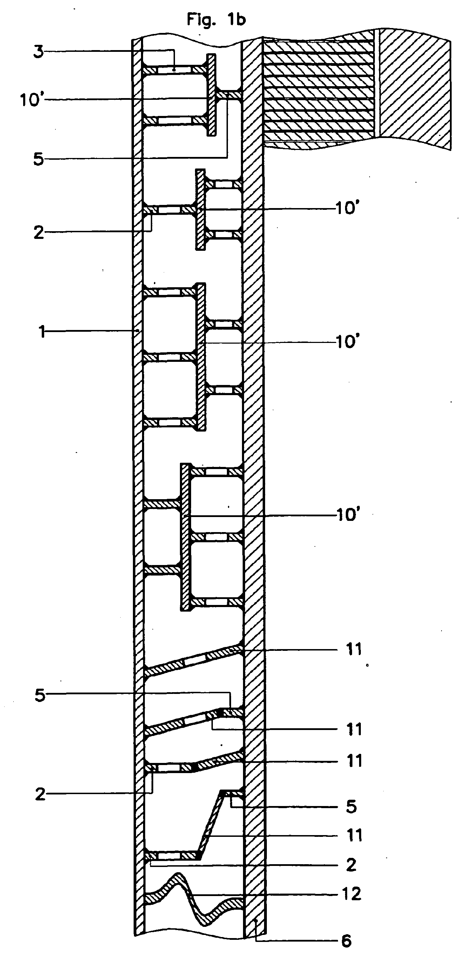

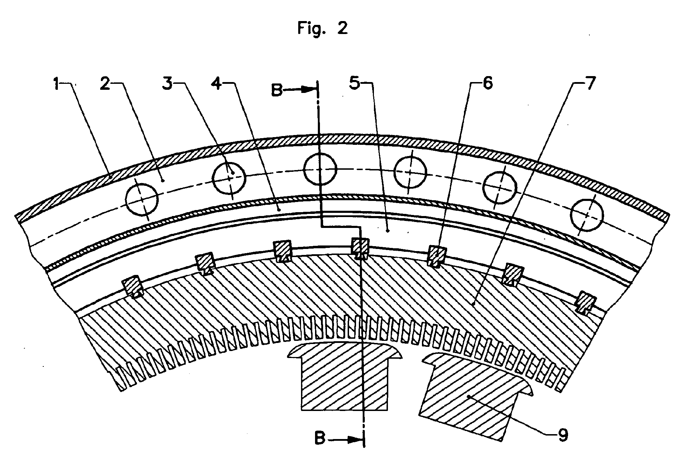

Die Erfindung wird anhand der angeschlossenen Figuren 1a , 1b und 2, die eine erfindungsgemäße dynamoelektrische Maschine beispielhaft und schematisch darstellen, und der folgenden Beschreibungen erläutert. Es zeigen:
Fig. 1a und 1b einen Längsschnitt durch einen erfindungsgemäßen Generator entlang B-B in Fig. 2.
Fig. 2 einen Querschnitt durch den Generator entlang A-A in Fig. 1a.

Im Generator der Fig. 1a und 1b sind an der Innenseite des Gehäusemantels 1 kreisringförmige Gehäusespanten 2 befestigt. Diese weisen mögliche Belüftungsöffnungen 3 für den axialen Transport von Kühlmedium durch die Gehäusespanten 2 zur Kühlung der dynamoelektrischen Maschine insbesondere des Blechpaketes 7 auf. Die Rotationsschale 4 ist mit einem Ende an der Gehäusespante 2 befestigt, mit dem anderen Ende am Haltering 5. Der Haltering 5 ist mit den axial verlaufenden Blechpaketleisten 6 verbunden, welche das Blechpaket 7 des Stators tragen. Der Pol 9 des Rotors ist um eine nicht dargestellte Drehachse des Rotors drehbar, die in der Zeichnungsebene senkrecht von oben nach unten verläuft.

Im oberen Teil von Fig. 1a, der durch einen wellenförmigen Schnitt vom unteren Teil der Fig. 1a getrennt ist, wiederholt sich die Kombination aus Gehäusespante 2, Rotationsschale 4 und Haltering 5 in gleichbleibenden Abständen in Axialrichtung. Der einer Rotationsschale 4 zugehörige Haltering 5 ist gegenüber der zugehörigen Gehäusespante 2 axial versetzt. Die Rotationsschale 4 besteht aus zwei Zylindermantel-Elementen, die durch ein Kegelstumpfmantel-Element miteinander verbunden sind.

In diesem Fall nimmt der Durchmesser der Rotationsschale 4 von der Gehäusespante 2 beginnend ab. Grundsätzlich kann der Durchmesser der Rotationsschale 4 von der Gehäusespante 2 beginnend auch noch zunehmen.

Im unteren Teil der Fig. 1a werden exemplarisch verschiedene weitere Vorrichtungen zur thermomechanischen Entkoppelung gezeigt. Es ist jeweils nur eine Vorrichtung dargestellt, welche sich dann auch wieder axial wiederholen würde. Verschiedene Ausführungsformen können in einem Generator kombiniert werden.

Unternalb des wellenförmigen Schnitts besteht die erste Ausführung der Erfindung aus einer Rotationsschale in Form eines Zylindermantels 10, der mit einer Gehäusespante 2 und einem dazu axial versetzten Haltering 5 verbunden ist.

Darunter ist eine Vorrichtung mit zwei gleich axial hohen konzentrischen Zylindermänteln 10 dargestellt, die durch zwei Distanzelemente 8 in Form von Kreisringen auf Abstand gehalten werden. Haltering 5 und Gehäusespante 2 greifen in der Mitte der Zylindermänteln 10 an und sind axial auf gleicher Höhe.

Bei der Ausführung der Erfindung darunter ist nur ein Distanzelement 8 nahe einem Rand der Zylindermäntel 10 vorgesehen, Haltering 5 und Gehäusespante 2 greifen am anderen Rand der Zylindermäntel 10 an.

In der Ausführung der Erfindung darunter sind die beiden Zylindermäntel 10 ungleich axial hoch, Haltering 5 und Gehäusespante 2 greifen aber wieder jeweils nahe dem Rand der Zylindermäntel 10 an, folglich sind Haltering 5 und Gehäusespante 2 axial zueinander versetzt.

In der untersten Ausführung der Erfindung ist die Position der beiden ungleich axial hohen Zylindermäntel 10 vertauscht, entsprechend ändern sich auch die Positionen von Haltering 5 und Gehäusespante 2.

In Fig. 1b sind von oben nach unten wieder verschiedene Vorrichtungen zur thermomechanischen Entkoppelung gezeigt, wobei wieder jeweils nur eine Vorrichtung dargestellt ist, welche sich dann auch wieder axial wiederholen kann. Aber auch hier können sich in einem Generator verschiedene Ausführungsformen befinden. Im obersten Beispiel findet sich ein Zylindermantel 10', der sich über zwei Gehäusespanten 2 erstreckt, die jeweils nahe dem Rand des Zylindermantels 10' angeordnet sind. In der Mitte des Zylindermantels greift ein Haltering 5 an. Die Gehäusespanten 2 weisen Belüftungsöffnungen 3 auf.

Darunter ist ein Zylindermantel 10' dargestellt, der von zwei Halteringen 5 und einer Gehäusespante 2 getragen wird.

Das nächste Beispiel zeigt einen Zylindermantel 10', der von drei in gleichen Abständen angeordneten Gehäusespanten 2 und zwei Halteringen 5 in seiner Position gehalten wird. Es können jedoch auch mehrere Gehäusespanten und Halteringe über einen Zylindermantel miteinander verbunden werden: z. B. vier Gehäusespanten 2 und drei Halteringe 5.

Darunter ist der umgekehrte Fall dargestellt: zwei Gehäusespanten 2 halten einen Zylindermantel 10', der auf der anderen Seite von drei in gleichen Abständen angeordneten Halteringen 5 gehalten wird. Es können jedoch auch mehrere Gehäusespanten und Halteringe über einen Zylindermantel miteinander verbunden werden: z. B. drei Gehäusespanten 2 und vier Halteringe 5.

Es folgt eine Rotationsschale in Form eines einfachen Kegelstumpfmantels, der ohne Gehäusespanten und ohne Halteringe direkt am Gehäusemantel 1 bzw. an den Blechpaketleisten 6 befestigt ist und ebenfalls Belüftungsöffnungen aufweist.

Darunter sind zwei weitere Varianten mit jeweils einem Kegelstumpfmantel als Rotationsschale dargestellt. In der oberen Darstellung einer Ausführung der Erfindung ist der Kegelstumpfmantel 11 an seiner Außenseite direkt am Gehäusemantel 1 befestigt, an seiner Innenseite jedoch mit einem Haltering 5 an der Blechpaketleiste 6. Der Kegelstumpfmantel weist Belüftungsöffnungen auf.

In der unteren Darstellung ist der Kegelstumpfmantel 11 an seiner Außenseite an einer Gehäusespante 2 befestigt, an seiner Innenseite direkt mit den Blechpaketleisten 6 verbunden. Die Gehäusespante weist Belüftungsöffnungen auf. In der Ausführung der Erfindung darunter ist der Kegelstumpfmantel 11 mit der Gehäusespante 2 und mit dem Haltering 5 verbunden. Die Gehäusespante 2 weist Belüftungsöffnungen auf.

Das unterste Beispiel zeigt schließlich eine mehrfach gekrümmte Rotationsschale 14, die ebenfalls direkt am Gehäusemantel 1 bzw. an den Blechpaketleisten 6 befestigt ist.

Es ist in Fig. 2 zu erkennen, dass die Gehäusespante 2 innerhalb des Gehäusemantels 1 über den gesamten Umfang angeordnet ist, wobei die Gehäusespante 2 mögliche Belüftungsöffnungen 3 aufweist. Die Rotationsschale 4 ist durchgehend um den gesamten Umfang ausgeführt. Am Haltering 5 sind in gleichen Abständen voneinander die Blechpaketleisten 6 befestigt. An diesen ist das Blechpaket 7 befestigt. Auf eine Darstellung der elektrischen Wicklungen wurde verzichtet. Die Drehachse des Pols 9 ist nicht dargestellt.

### Bezugszeichenliste:

- 1: Gehäusemantel
- 2: Gehäusespante
- 3: Belüftungsöffnung
- 4: Rotationsschale
- 5: Haltering
- 6: Blechpaketleiste
- 7: Blechpaket
- 8: Distanzelement
- 9: Pol des Rotors
- 10: Zylindermantel
- 10': Zylindermantel
- 11: Kegelstumpfmantel
- 12: mehrfach gekrümmte Rotationsschale

## Patentansprüche

1. Vorrichtung zur thermomechanischen Entkoppelung von Gehäuse (1, 2) und feststehendem Teil (5, 6, 7) einer dynamoelektrischen Rotationsmaschine, wobei diese Vorrichtung zumindest eine Rotationsschale (4) aufweist, die an einem Ende am Gehäuse (1, 2) der Rotationsmaschine, und am anderen Ende an einem Haltering (5) des feststehenden Teils (5, 6, 7) der Rotationsmaschinel befestigbar ist, sodass sich die Rotationsschale (4) im befestigten Zustand in axialer Richtung erstreckt, **dadurch gekennzeichnet, dass** die Rotationsschale ein Kegelstumpfmantel (11) ist, oder dass die Rotationsschale (4) ein Zylindermantel (10) ist, der an einem Ende an einem Gehäusespant (2) befestigt ist, wobei ein axialer Versatz zwischen dem Gehäusespant (2) und dem Haltering (5) besteht, oder dass die Rotationsschale (4) aus zwei konzentrischen Zylindermänteln (4) besteht, wobei ein axialer Versatz zwischen dem Haltering (5) und einem Distanzelement (8) zur radialen Beabstandung der beiden Zylindermäntel (4) besteht.

2. Vorrichtung nach Anspruch 1, **dadurch gekennzeichnet, dass** die Rotationsschale Öffnungen aufweist.

3. Vorrichtung nach einem der Ansprüche 1 bis 2, **dadurch gekennzeichnet, dass** die Rotationsschale durchgehend ringförmig ist.

4. Vorrichtung nach einem der Ansprüche 1 bis 2, **dadurch gekennzeichnet, dass** die Rotationsschale aus mehreren Ringsegmenten besteht.

5. Dynamoelektrische Rotationsmaschine, umfassend zumindest ein Gehäuse (1, 2) und einen feststehenden Teil (5, 6, 7), **dadurch gekennzeichnet, dass** diese eine Vorrichtung zur thermomechanischen Entkoppelung nach einem der Ansprüche 1 bis 4 aufweist.

6. Rotationsmaschine nach Anspruch 5, **dadurch gekennzeichnet, dass** das Gehäuse einen Gehäusemantel (1) mit nach innen gerichteten Gehäusespanten (2) aufweist und die Vorrichtung zur thermomechanischen Entkoppelung an den Gehäusespanten (2) befestigt ist.

7. Rotationsmaschine nach Anspruch 5 oder 6, **dadurch gekennzeichnet, dass** der feststehende Teil ein Blechpaket (7) umfasst, das mittels Blechpaketleisten (6) mit den Halteringen (5) verbunden ist.

8. Rotationsmaschine nach einem der Ansprüche 5 bis 7, **dadurch gekennzeichnet, dass** diese als dynamoelektrische Maschine, insbesondere als Generator, ausgebildet ist.

9. Rohrturbinengenerator, **dadurch gekennzeichnet, dass** dieser einen Generator nach Anspruch 8 aufweist.

10. Verwendung einer Vorrichtung zur thermomechanischen Entkoppelung nach einem der Ansprüche 1 bis 4 zum Einbau zwischen Gehäuse (1, 2) und einem Haltering (5) des feststehenden Teils (5, 6, 7) einer dynamoelektrischen Rotationsmaschine.

## Claims

1. Device for thermo-mechanical decoupling of the housing (1, 2) and the non-rotating part (5, 6, 7) of a dynamo-electric rotary machine, where this device has at least one shell of rotation (4), one end of which can be attached to the housing (1, 2) of the rotary machine and the other end to a retaining ring (5) of the non-rotating part (5, 6, 7) of the rotary machine such that the shell of rotation (4) extends in axial direction when secured, **characterized by** the shell of rotation being a truncated cone shell (11) or by the shell of rotation (4) being a cylinder shell (10), one end of which is attached to a housing rib (2), where there is axial misalignment between the housing rib (2) and the retaining ring (5), or by the shell of rotation (4) consisting of two concentric cylinder shells (4), where there is axial misalignment between the retaining ring (5) and a spacer element (8) to maintain radial spacing between the two cylinder shells (4).

2. Device according to Claim 1, **characterized by** the shell of rotation having openings.

3. Device according to one of Claims 1 to 2, **characterized by** the shell of rotation being ring-shaped throughout.

4. Device according to one of Claims 1 to 2, **characterized by** the shell of rotation comprising several ring segments.

5. Dynamo-electric rotary machine, comprising at least one housing (1, 2) and a non-rotating part (5, 6, 7), **characterized by** the machine having a device for thermo-mechanical decoupling according to one of Claims 1 to 4.

6. Rotary machine according to Claim 5, **characterized by** the housing having a housing shell (1) with housing ribs (2) facing inwards and the device for thermo-mechanical decoupling being secured to the housing ribs (2).

7. Rotary machine according to Claim 5 or 6, **characterized by** the non-rotating part containing a stator core (7) connected to the retaining rings (5) by means of stator core ledges (6).

8. Rotary machine according to one of Claims 5 to 7, **characterized by** the machine being designed as a dynamo-electric machine, particularly as a generator.

9. Bulb turbine generator, **characterized by** it having a generator according to Claim 8.

10. Use of a device for thermo-mechanical decoupling according to one of Claims 1 to 4 for installation between housing (1, 2) and a retaining ring (5) at the non-rotating part (5, 6, 7) of a dynamo-electric rotary machine.

## Revendications

1. Dispositif servant au découplage thermomécanique du carter (1, 2) et de la partie fixe (5, 6, 7) d'une machine rotative dynamo-électrique, ce dispositif ayant au moins une chemise de rotation (4), dont un bout peut être attaché au carter (1, 2) de la machine rotative et l'autre bout peut être attaché à un anneau de support (5) de la partie fixe (5, 6, 7) de la machine rotative, de manière que la chemise de rotation (4), une fois fixée, s'étend au sens axial, **caractérisé en ce que** la chemise de rotation est une chemise en forme tronconique (11), ou bien que la chemise de rotation (4) est une chemise cylindrique (10) dont un bout est attaché à une nervure de carter (2), la nervure du carter (2) et l'anneau de support (5) étant décalés axialement, ou bien que la chemise de rotation (4) consiste en deux chemises cylindriques concentriques (4), l'anneau de support (5) et une pièce d'écartement (8) étant décalés axialement afin d'espacer les deux chemises cylindriques (4).

2. Dispositif selon la revendication 1, **caractérisé en ce que** la chemise de rotation comporte des ouvertures.

3. Dispositif selon l'une des revendications 1 à 2, **caractérisé en ce que** toute la chemise de rotation a une forme annulaire.

4. Dispositif selon l'une des revendications 1 à 2, **caractérisé en ce que** la chemise de rotation comporte plusieurs segments annulaires.

5. Machine rotative dynamo-électrique, comportant au moins un carter (1, 2) et une partie fixe (5, 6, 7), **caractérisée en ce que** la machine comporte un dispositif servant au découplage thermomécanique selon l'une des revendications 1 à 4.

6. Machine rotative selon la revendication 5, **caractérisée en ce que** le carter a une chemise (1) avec nervures de carter (2) s'orientant vers l'intérieur et le dispositif de découplage thermomécanique est attaché aux nervures du carter (2).

7. Machine rotative selon les revendications 5 ou 6, **caractérisée en ce que** la partie fixe contient un noyau feuilleté (7) relié aux anneaux de support (5) moyennant des barrettes de noyau feuilleté (6).

8. Machine rotative selon l'une des revendications 5 à 7, **caractérisée en ce que** la machine est étudiée en tant que machine dynamo-électrique, notamment en tant que générateur.

9. Générateur de turbine bulbe, **caractérisé en ce que** celui-ci comporte un générateur selon la revendication 8.

10. Utilisation d'un dispositif de découplage thermomécanique selon l'une des revendications 1 à 4 pour installation entre le carter (1, 2) et un anneau de support (5) de la partie fixe (5, 6, 7) d'une machine rotative dynamo-électrique.
